# EUROPEAN PATENT SPECIFICATION

(11) **EP 0 865 913 B1**
(45) Date of publication and mention of the grant of the patent: **06.10.2004**
(21) Application number: 98104781.4
(22) Date of filing: 17.03.1998
(51) Int. Cl.: B32B 27/32, C08K 5/00, C08K 5/20, B32B 27/18

(54) **Use of polymeric films**
Verwendung von Polymerfilme
Utilisation des films polymères

(30) Priority: 18.03.1997 GB 9705545
(43) Date of publication of application: 23.09.1998
(73) Proprietor: Treofan Germany GmbH & Co.KG, 66539 Neunkirchen (DE)
(72) Inventor: Davidson, Paul Malcolm Mackenzie, Elcombe, Swindon, SN4 0NW (GB); Biddiscombe, Helen Ann, North Petherton, Bridgwater, TA6 6SN (GB); Govier, Rebecca Karen, Abbey Meads, Swindon, SN2 3YB (GB); Ott, Marc Fritz Manfred, Wootton Bassett, Swindon, SN4 8LJ (GB)
(74) Representative: Luderschmidt, Schüler & Partner GbR

(56) References cited:
- EP-A- 0 406 642
- EP-A- 0 499 669
- EP-A- 0 632 095
- WO-A-98/04409
- US-A- 4 185 148
- US-A- 4 619 859
- US-A- 4 975 469
- US-A- 5 176 953
- US-A- 5 231 126
- US-A- 5 310 584
- Chu; Kimura: Polymer, vol. 37(4), p. 573-579 (1996)

## Description

This invention concerns the use of heat shrinkable polyolefin films and in particular heat shrinkable polypropylene films in a heat shrink process.

Heat shrinkability is a property common to substantially all oriented polypropylene films if they are heated to sufficiently high temperatures. However, shrinkable polypropylene films are known which shrink at relatively low temperatures. This low-temperature shrinkage is achieved as a result of the films containing certain additives which facilitate such shrinkage and/or the films having been oriented under stretching conditions which enable shrinkage to occur at low temperatures.

Particularly commonly used additives for inducing shrinkability after orientation are hydrogenated hydrocarbon resins. However, such resins have the disadvantage that they often migrate during end use applications, for example, in packaging foodstuffs.

Stretching of polypropylene films at low temperatures can be used to impart heat shrinkability, but the shrinkability achieved tends to be limited. Furthermore, low temperature stretching often presents difficulties in film manufacture due to the greater forces required to effect stretching of the films. In addition, with particulate voiding agents known in the art, the degree of shrinkability achievable by this method is often inadequate.

It is an object of the present invention to provide the use, in a heat shrink process, of films having heat-shrinkability at low temperatures, without requiring the use of additives and stretching conditions used in the above-described art.

In accordance with these and other objectives, there has been provided in accordance with the present invention, the use, in a heat shrink process of a biaxially-oriented, heat shrinkable polyolefin film comprising a microvoided layer of polypropylene-based resin and αβ-nucleating agent, the microvoids having been formed by stretching a web containing the beta-form of polypropylene, the film having a shrinkage after 10 minutes at 130°C of at least 10% in at least one direction.

"Polypropylene-based resin" or "polypropylene-based polymer" and "Polypropylene" are used synonymously. These terms shall mean polymers containing at least 50 % by weight, based on the weight of the polymer, of propylene units.

"Web" shall mean a sheet like extrudate resulting from extruding the respective polymer melt or melts through a slot die and subsequent cooling of the melt to form the unoriented film.

"Base layer" shall mean either "the layer" in case of a monolayered film or the thickest layer, generally being the innermost, central layer of the multilayer structure.

"Beta form of polypropylene" shall mean that crystalline modification of polypropylene which has a lower melting point and a lower density than the common alpha form of propylene.

"Microvoids" shall mean the hollow vacuoles in the polymer matrix reducing the density of the oriented polypropylene film wherein the reduced density is lower than that of a corresponding film without any voids.

Films used in accordance with the present invention have shrinkages of at least 10% in at least one direction after heating at 130°C for 10 minutes. Higher shrinkages have been achieved, for example, of at least 12.5%, *e.g*., at least 15%, and more, *e.g*., at least 20%. Even higher shrinkages approaching 30% have been observed with films in accordance with the present invention.

Although films used in accordance with the present invention have a shrinkage of at least 10% in one direction, they can have shrinkages in excess of 10% in both the machine and transverse directions. The respective shrinkages in the machine and transverse directions can be the same but will usually differ, with the machine direction shrinkage being either greater than or less than the shrinkage in the transverse direction.

Films used in accordance with the present invention preferably do not contain a hydrocarbon resin of the type used hitherto to produce heat shrinkable polypropylene films.

The beta-form of polypropylene is relatively unstable compared with the corresponding alpha-form under the conditions usually used to produce polypropylene films. Thus, when melts of polypropylene are extruded and then cooled to form a polymeric film, which may then subsequently be stretched, the alpha-form of polypropylene tends to predominate. However, it is known to produce films using polypropylene containing high concentrations of the beta-form of polypropylene by mixing polypropylene containing a high proportion of the alpha-form with a suitable nucleating agent which induces the formation of high concentrations of the beta-form when it is molten and subsequently cooled.

One example of such a process is described in U.S. Patent No. 4,386,129. This patent describes a process in which a variety of so-called beta-nucleators are dispersed in polypropylene following which films are produced therefrom by melting and subsequent cooling. The crystallinity of the resulting cast films is controlled by appropriate adjustment of the cooling conditions. Selective extraction of the beta-form of the polypropylene from the films leaves a matrix of the alpha-form to impart porosity to the films.

U.S. Patent No. 5,231,126 describes the use of two component mixtures of beta-nucleating agents to produce microporous films by mono- or biaxial stretching cast polypropylene webs containing a high concentration of the beta-form of polypropylene resulting from the use of the mixture of nucleating agents. It is believed that the porosity results from voids induced by the change of the beta-form into the alpha-form during the stretching process, the alpha-form having a higher density than the beta-form from which it is derived. The development of porosity during the stretching process is accompanied by a significant reduction in apparent film density and the films become opaque with a high degree of whiteness.

More recently it has been proposed in EP 0632095 to use a variety of organic amides as beta-nucleating agents in the formation of mono- and biaxially stretched polypropylene films. In this document, a melt of a mixture of polypropylene and the nucleating agent is cast into a film web which is allowed to crystalize at a temperature of 15 to 140°C to form a solid web containing the beta-form of polypropylene. Then the web is mono- or biaxially stretched at a temperature above 20°C but less than the melting point of the beta-form crystals in the web. The resulting stretched films are said to have high whiteness and hiding power combined with printability and writeability.

Microvoid formation during the plastic deformation of the beta-form of polypropylene is also described in the journal POLYMER (Vol. 35, No. 16, pp. 3442-5, 1995; and Vol. 36, No. 13, pp. 2523-30, 1995). Porosity is said to increase with higher crystallization and lower stretching temperatures, all samples containing the beta-form apparently becoming opaque when stretched at temperatures below 120-130°C.

In the present invention, the polypropylene-based resin or polypropylene based polymer can be any resin or polymer containing propylene units, generally at least 50% by weight of propylene units, preferably 80-100% by weight of propylene, for example 95-100% by weight of propylene, in each case based on the total polymer weight. The polypropylene-based polymer is preferably a propylene homopolymer or a random or block copolymer or terpolymer containing a major proportion (80-100wt%) of units derived from propylene, the remainder being ethylene or butylene and having a crystallinity of at least 40%, preferably 50 to 90%. Usually the polypropylene based polymer has a melting point of 140-170° C, preferably 155-165°C and a melt flow index (DIN 53 735 at 21,6 N and 230°C) of 1.0 - 10 g/10min, preferably 1.5-6.5 g/10min. Most preferred is isotactic propylene homopolymer containing about 100% propylene units and a melting point of 160-162°C.

The nucleating agent used to induce the formation of the propylene beta-form of the polypropylene of the base layer can be selected from those proposed hitherto for this purpose. Any desired nucleating agent or agents can be used. However, particularly good results have been achieved using amides as proposed in EP 0632095, and more particularly, N,N'-dicyclohexyl-2,6-naphthalene dicarboxamide.

The amount of nucleating agent used to induce the formation of the beta-form of polypropylene can be varied, as desired to give the desired amount of beta-form. For example, from 0.0001 to 5 wt%, preferably from 0,001 to 2 wt% of the nucleating agent based on the weight of polypropylene can be used, as described in EP 0632095, preferred amounts being from 0.001 to 1 wt%.

The polypropylene should have a sufficient amount of beta-form, so as to give the desired amount of microvoids, and to provide the desired opaqueness, upon stretching.

Films used in accordance with the present invention can consist of a single layer of a polypropylene-based resin containing microvoids, but they will often include one or more further layers, for example to impart particular properties to the film such as gloss, printability, and/or heat sealability. The films can, for example, include an outer layer which confers such properties, and this layer can be in direct contact with the voided polypropylene base layer or it can be an outer layer on one or more intermediate layers on the base layer.

Further layers can be formed from any desired materials and are preferably formed from polyolefins. Examples of polymers which can be used for this purpose include polymers containing units derived from one or more of ethylene, propylene, butene-1, and higher aliphatic alpha-olefins, and blends of such polymers. Other polymeric materials which can be used for these other layers include, for example, acrylic polymers, and polyolefins extended with unsaturated carboxylic acids and derivatives thereof, *e.g.* acid ionomers and anhydrides.

Although only one surface of the voided polypropylene layer may have a further layer thereon, the other surface of the base layer can also have any further layers thereon. For example, a heat sealable layer which can be the same as or different from the optional layer on the other surface of the films can be used. Preferred materials for this layer are selected from copolymers referred to above. Intermediate layers can be present between the voided layer and the outer layer.

Films used in accordance with the present invention can include one or more additives used in the polyolefin art, for example, slip agents, antistatic agents, antiblock agents, stabilizers, UV absorbers or pigments. Such additives, when present, preferably are present in amounts which do not significantly adversely affect the ability of polypropylene to crystalize in its beta-form. When additives are present, they can be added to one or more of the layers of which the film is constructed.

In accordance with the invention, no external additives, such as calcium carbonate or other void- initiating particles like polyethylene tcrephtalate (PET) or titanium dioxide or other white pigments are needed to give an opaque film. External additives arc additives other than polypropylene and being incompatible with polypropylene and causing formation of voids upon stretching..

Films used in accordance with the present invention can be produced using known methods, for example, by extrusion or coextrusion through a slot die of melts of the appropriate polymers for the layer or layers which may be desired, to form a polymer web which is cooled and thereafter sequentially biaxially stretched. However, the heat seal layer or layers can be applied to the voided polypropylene-based resin layer by coating after the voided layer has been formed.

It is generally desired to effect stretching of the films in the machine direction at a temperature of not more than 145°C. It is also generally desirable to carry out the processing steps, particularly the initial crystallization of the polypropylene from a melt containing the beta-form nucleating agent, under conditions which will bring about the formation of the desired film structure. More particularly, the cooling should be effected under conditions such that the beta-form of polypropylene is produced and void formation can occur during subsequent stretching of the films.

The cooling or crystallization temperature used to induce the formation of the beta-form of polypropylene in the base layer of films of the present invention prior to their being stretched should be at least 20°C but less than the melting point of the beta-form of polypropylene. Although temperatures at the lower end of this range, for example up to 50°C, can be used, it is generally preferred to use temperatures of at least 70°C, and higher temperatures still are often preferred, for example 90°C or more. However, the cooling temperature is preferably not more than 140°C, and from practical considerations it is preferably below the temperature at which the film sticks to surfaces used to cool it.

Cooling of the melt can be effected in air of a suitable temperature, but it is generally preferred to effect cooling by contacting the extruded web with a cooling surface, for example, a chill roll.

Subsequent biaxial stretching of the cooled web is preferably but not necessarily effected sequentially, sequential stretching enabling the conditions used in the two directions to be selected independently of each other. Stretching in the direction of extrusion (the machine direction) will usually be effected before stretching in the transverse direction.

The conditions used to effect stretching in the machine direction have been found to have a substantial effect on microvoid formation, lower stretch temperatures and lower stretch ratios usually leading to increased voiding. A preferred temperature range for stretching in the machine direction is from 70 to 110°C, and more preferably from 80 to 95°C, and the stretch ratio used in the machine direction will usually be at least 3:1, a more preferred range being from 3.5:1 to 8:1.

Subsequent stretching of the films in the transverse direction will in general be effected at lower temperatures than are conventionally used for the transverse stretching of polypropylene films, for example in an atmosphere of temperature of less than 160°C, and preferably less than 155°C, for example less than 150°C. The temperature can be as low as 100°C, but the preferred temperature range is from 140 to 152°C.

The stretch ratio used in the transverse direction is preferably from 3:1 to 10: 1.

The following Examples fall outside the scope of the claims.

### Examples 1 to 8

A series of polymer webs was produced by extruding through a slot die a melt of propylene homopolymer containing 0.1 wt% of a beta-form nucleating agent (N,N'-dicyclohexyl-2,6-naphthalene dicarboxamide; NJ-Star NU-100, ex New Japan Chemical Co., Ltd.). In some cases (Examples 2, 4 and 8), a layer of a propylene/ethylene copolymer (4 wt% ethylene) was also coextruded with the polypropylene homopolymer.

In each case, the homopolymer layer was cooled by bringing it into contact with a chill roll having a surface temperature of 100°C, and the other surface of the homopolymer layer, or the copolymer layer when present, was cooled in the ambient air.

DSC measurements indicated the homopolymer layer contained a high level of the beta-form of polypropylene with Tₘ of 153°C.

Thereafter, the cooled webs were stretched in the direction of extrusion by contact with heated rolls having different peripheral speeds to produce an opaque mono-axially stretched web, DSC showing that virtually all of the beta-polypropylene had been converted into the alpha-form.

Each mono-axially stretched web was then stretched in the transverse direction using a stenter oven.

The conditions used to effect stretching of the various webs are shown in Table 1.

**Table 1**

| Ex. | Extra Layer (µm) | MD Temp (°C) | Stretch Ratio (X:1) | TD Temp (°C) | Stretch Ratio (Y:1) | Overall Thickness (µm) | Film Density (g/cm³) | Optical Density |
|---|---|---|---|---|---|---|---|---|
| 1* | - | 90 | 4.5 | 160 | 8 | 31.5 | 0.85 | 0.19 |
| 2 | 1 | 90 | 4.5 | 152 | 8 | 43.0 | 0.73 | 0.68 |
| 3 | - | 80 | 3.5 | 150 | 6 | 50.5 | 0.66 | 0.75 |
| 4 | 1 | 90 | 4.5 | 144 | 8 | 54.0 | 0.59 | 0.87 |
| 5 | - | 90 | 5 | 135 | 7 | 32.0 | 0.62 | 0.645 |
| 6 | - | 80 | 3.5 | 122 | 5.8 | 54.3 | 0.59 | 0.73 |
| 7 | - | 80 | 3.5 | 122 | 6.5 | 54.3 | 0.63 | 0.72 |
| 8 | 1 | 90 | 4.5 | 120 | 8 | 60.2 | 0.63 | 0.76 |

| | | | | | | | | |
|---|---|---|---|---|---|---|---|---|
| * Comparison Example. | | | | | | | | |

### Example 9 (Comparison)

A three layer polymer web was produced by coextruding through a slot die a core layer of a propylene homopolymer containing 5 wt% of chalk particles (mean particle size 3µm), with two outer layers of the propylene/ethylene copolymer used in Examples 1 to 8, and the extrudate was cooled on a chill roll with a surface temperature of 20°C.

Thereafter the web was stretched 5:1 in the machine direction by passing it over a series of rollers having different peripheral speeds at a temperature of 100°C before being stretched 8:1 in the transverse direction in a stenter oven at a temperature of 160°C.

The resulting voided film had a total thickness of 40µm, with the copolymer layer each being 1µm thick.

The films from Examples 1 to 9 were then heat shrunk for 10 minutes at a temperature of 130°C, and the results obtained are shown in Table 2.

**Table 2**

| Example | MD Shrinkage | TD Shrinkage |
|---|---|---|
| 1* | 6.5 | 8.8 |
| 2 | 9.8 | 13.5 |
| 3 | 7.2 | 13.9 |
| 4 | 11.9 | 26.5 |
| 5 | 12.6 | 24.2 |
| 6 | 14.4 | 28.5 |
| 7 | 14.9 | 26.5 |
| 8 | 16.0 | 28.4 |
| 9* | 8 | 4 |

| | | |
|---|---|---|
| * Comparison Examples. | | |

Although only a few exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

## Claims

1. Use of a biaxially-oriented polyolefin film in a heat shrink process, wherein said film comprises a microvoided layer of a polypropylene-based resin and a β-nucleating agent, wherein the microvoids have been formed by stretching a web containing the beta-form of polypropylene, the film having a shrinkage after 10 minutes at 130°C of at least 10% in at least one direction.

2. A use according to claim 1, the film having a shrinkage after 10 minutes at 130°C of at least 15% in at least one direction.

3. A use according to claim 1, the film having a shrinkage after 10 minutes at 130°C of at least 20% in at least one direction.

4. A use according to claim 1, the film having a shrinkage in both the machine and transverse directions after 10 minutes at 130°C of at least 10%.

5. A use according to claim 1, wherein at least one surface the film of has been treated to increase its surface energy.

6. A use according to claim 1, the film comprising one or more of a slip agent, an antistatic agent, an antiblock agent, a stabilizer, a UV absorber, or a pigment.

7. A use according to claim 1, the film comprising no void-initiating particles or opacifying pigments.

8. A use according to claim 1, the film having shrinkage after 10 minutes at 130°C of at least 10% in the machine direction.

9. A use according to claim 1, the film having shrinkage after 10 minutes at 130°C of at least 10% in the traverse direction.

10. A use according to claim 1, in which the film does not comprise a hydrogenated hydrocarbon resin.

## Patentansprüche

1. Verwendung einer biaxial orientierten Polyolefinfolie in einem Heißschrumpfverfahren, **dadurch gekennzeichnet, dass** die Folie eine mikrovakuolenhaltige Schicht aufweist, die aus einem Harz auf der Basis von Polypropylen und aus einem β-Keimbildner besteht, wobei die Mikrovakuolen durch Strecken einer Beta-Polypropylen enthaltenden Bahn gebildet werden und die Folie nach 10 Minuten bei 130 °C eine Schrumpfung von mindestens 10 % in mindestens einer Richtung aufweist.

2. Verwendung nach Anspruch 1, wobei die Folie nach 10 Minuten bei 130 °C eine Schrumpfung von mindestens 15 % in mindestens einer Richtung aufweist.

3. Verwendung nach Anspruch 1, wobei die Folie nach 10 Minuten bei 130 °C eine Schrumpfung von mindestens 20 % in mindestens einer Richtung aufweist.

4. Verwendung nach Anspruch 1, wobei die Folie nach 10 Minuten bei 130 °C eine Schrumpfung von mindestens 10 % sowohl in Fließrichtung als auch in Querrichtung aufweist.

5. Verwendung nach Anspruch 1, **dadurch gekennzeichnet, dass** mindestens eine Oberfläche der Folie behandelt wurde, um ihre Oberflächenenergie zu erhöhen.

6. Verwendung nach Anspruch 1, wobei die Folie ein oder mehrere Gleitmittel, Antistatikmittel, Antiblockmittel, Stabilisatoren, UV-Absorber oder Pigmente enthält.

7. Verwendung nach Anspruch 1, wobei die Folie keinerlei Vakuolen bildende Partikel oder Opazität erzeugende Pigmente aufweist.

8. Verwendung nach Anspruch 1, wobei die Folie nach 10 Minuten bei 130 °C eine Schrumpfung von mindestens 10 % in Fließrichtung aufweist.

9. Verwendung nach Anspruch 1, wobei die Folie nach 10 Minuten bei 130 °C eine Schrumpfung von mindestens 10 % in Querrichtung aufweist.

10. Verwendung nach Anspruch 1, wobei die Folie kein hydriertes Kohlenwasserstoffharz enthält.

## Revendications

1. Utilisation d'un film polyoléfine biorienté dans un processus de thermorétraction, ledit film comportant une couche microalvéolée constituée de résine à base de polypropylène et d'un agent de nucléation β, les microalvéoles ayant été formées en étirant une feuille contenant la forme béta du polypropylène, le film présentant, au bout de 10 minutes à 130 °C, une rétraction thermique d'au moins 10 % dans au moins une direction.

2. Utilisation selon la revendication 1, le film présentant, au bout de 10 minutes à 130 °C, une rétraction thermique d'au moins 15 % dans au moins une direction.

3. Utilisation selon la revendication 1, le film présentant, au bout de 10 minutes à 130 °C, une rétraction thermique d'au moins 20 % dans au moins une direction.

4. Utilisation selon la revendication 1, le film présentant, au bout de 10 minutes à 130 °C, une rétraction thermique d'au moins 10 % à la fois dans la direction de la machine et dans la direction transversale.

5. Utilisation selon la revendication 1, **caractérisé en ce qu'**au moins une surface du film a été traitée pour augmenter son énergie de surface.

6. Utilisation selon la revendication 1, le film comportant un ou plusieurs agents de glissement, agents antistatiques, agents antibloquants, agents stabilisants, absorbeurs UV ou pigments.

7. Utilisation selon la revendication 1, le film ne comportant ni particules formant des alvéoles ni pigments opacifiants.

8. Utilisation selon la revendication 1, le film présentant, au bout de 10 minutes à 130 °C, une rétraction thermique d'au moins 10 % dans la direction de la machine.

9. Utilisation selon la revendication 1, le film présentant, au bout de 10 minutes à 130 °C, une rétraction thermique d'au moins 10 % dans la direction transversale.

10. Utilisation selon la revendication 1, le film ne comportant pas de résine d'hydrocarbure hydrogénée.
